# FASCICULE DE BREVET EUROPEEN

(11) **EP 0 611 219 B1**
(45) Date de publication et mention de la délivrance du brevet: **12.05.1999**
(21) Numéro de dépôt: 94400304.5
(22) Date de dépôt: 11.02.1994
(51) Int. Cl.: F16K 41/10, F16K 7/16, F16K 17/04

(54) **Soupapes de sûreté à membrane du type cartouche, de conception modulaire**
Patronenartiges Membran-Sicherheitsventil mit modularen Aufbau
Diaphragm safety cartridge valve of modular conception

(30) Priorité: 12.02.1993 FR 9301590
(43) Date de publication de la demande: 17.08.1994
(73) Titulaire: COMAP société anonyme, F-69008 Lyon (FR)
(72) Inventeur: Rager, Pierre, F-45530 Vitry aux Loges (FR)
(74) Mandataire: Maureau, Philippe

(56) Documents cités:
- EP-A- 0 504 084
- DE-A- 2 136 578
- DE-A- 2 206 560
- FR-A- 1 044 910

## Description

La présente invention concerne les soupapes à membrane, et plus particulièrement les soupapes de sûreté du type cartouche destinées à limiter la pression d'un fluide contenu dans une enceinte.

On connaît déjà de telles soupapes à membrane du type cartouche adaptées à coopérer avec un siège formé dans un corps ou bloc appartenant par exemple à un groupe de sécurité alimentant en eau froide un générateur d'eau chaude sanitaire à accumulation. La cartouche est un ensemble facilement démontable constitué notamment d'un disque formant clapet ainsi que d'un porte-disque et d'une membrane pouvant être en une seule pièce, d'un chapeau vissé dans le bloc, d'un bouton de manoeuvre, d'une tige d'assemblage, d'un ressort en compression entre le clapet et le chapeau, d'un anneau de blocage maintenant le bouton de manoeuvre en appui contre le chapeau et ainsi le ressort en compression, et d'un bouchon de protection et d'inviolabilité pouvant servir à l'identification de la soupape.

Ces soupapes ont pour avantage d'être constituées d'un nombre modéré de pièces, de présenter des dispersions de caractéristiques relativement faibles permettant une bonne interchangeabilité de leurs composants et des soupapes entre elles, d'être faciles à démonter et à remonter sans nécessiter un nouveau tarage, ou à tout le moins en permettant un nouveau tarage sommaire.

Néanmoins, elles conservent un certain nombre d'inconvénients, et, en particulier, lors du vissage de la cartouche, la membrane risque d'être vrillée ce qui est fâcheux pour l'étanchéité de la soupape.

Le document EP-A-0 504 084 décrit une soupape à membrane destinée à être montée sur un bloc récepteur en vue de limiter la pression d'un fluide, du type défini dans le préambule de la revendication 1.

Le document DE-A- 2 206 560 décrit une soupape à membrane comportant un organe annulaire de maintien fixé dans le chapeau, le pourtour de la membrane étant immobilisé entre une butée formée dans le chapeau et cet organe annulaire de maintien.

L'invention a pour but de remédier à cet inconvénient et principalement de créer une soupape de type cartouche qui soit modulaire, susceptible d'être actionnée par un poussoir thermique, réalisable soit en version pré-tarée soit en version tarable, et également qui présente un sens de montage unique quelles qu'en soient les versions.

A cet effet, l'invention concerne une soupape à membrane destinée à être montée sur un bloc récepteur en vue de limiter la pression d'un fluide, du type comportant au moins un chapeau dont une extrémité est adaptée à être fixée sur le bloc et portant à proximité de cette extrémité une membrane souple en une seule pièce avec un clapet destiné à coopérer avec un siège réalisé dans le bloc, un bouton de manoeuvre assemblé au chapeau dans la région de l'extrémité de celui-ci qui est opposée à la membrane, des moyens d'assemblage du clapet, du chapeau et du bouton de manoeuvre, et un organe élastique de tarage, les moyens d'assemblage comportant une tige d'assemblage traversant la soupape, du clapet au bouton de manoeuvre tous deux inclus, caractérisée en ce qu'elle comporte également un anneau de maintien fixé dans le chapeau et le pourtour de la membrane est immobilisé entre une butée formée dans le chapeau et cet anneau de maintien, et en ce que la tige d'assemblage est munie, à son extrémité traversant le clapet, d'une tête en appui sous ce clapet, contre la face de ce dernier qui est opposée au bouton de manoeuvre.

Grâce à l'anneau de maintien, la membrane est fixée de manière fiable sur le chapeau et tout vrillage est évité lors du vissage de la cartouche. La tige d'assemblage permet éventuellement l'actionnement de la soupape par un poussoir thermique. Comme tous les composants s'empilent ou se montent dans le même sens, à savoir par le dessus, les opérations d'assemblage sont facilitées et similaires quel que soit le type de soupape. La modularité de cette conception permet une adaptation à divers types d'application, en fonction des dimensions choisies pour les composants, et des matériaux utilisés pour ceux-ci.

Selon une caractéristique avantageuse de l'invention, le chapeau peut être en deux pièces solidarisées par exemple par vissage, l'une d'entre elles étant un organe de tarage permettant de régler avec précision la pression d'ouverture de la soupape.

D'autres caractéristiques et avantages de l'invention ressortiront de la description qui va suivre d'une forme de réalisation de cette invention donnée à titre d'exemple non limitatif et représentée sur les dessins ci-joints dans lesquels :
- la Fig. 1 montre en section axiale longitudinale une soupape selon l'invention, montée sur un bloc récepteur, dans une version pré-tarée, et
- la Fig. 2 est une section axiale longitudinale, selon un plan perpendiculaire à celui de la figure 1, du même ensemble que celui de cette figure 1, à cette exception près que la soupape est une variante tarable de la précédente.

La soupape A représentée sur les dessins est destinée à limiter la pression à l'intérieur d'une enceinte telle que par exemple un ballon d'eau chaude à accumulation comportant un groupe de sécurité dont une pièce B que l'on désignera dans la suite sous le nom de "bloc" est adaptée à recevoir cette soupape A. A cet effet, à l'extérieur du bloc B, débouche un logement taraudé 1 dont le pourtour du fond constitue une butée 2, la partie centrale de ce fond étant percée d'un passage vers une chambre 3 dans laquelle débouche à son tour un conduit 4 de plus petit diamètre que ceux des régions précédentes et aligné dans le même axe que le logement 1. Le conduit 4 est raccordé à l'intérieur de l'enceinte dans laquelle la pression doit être limitée et la chambre 3 à une conduite de décharge de pression. La zone de transition entre la chambre 3 et le conduit 4, centrée également sur le même axe, constitue le siège 5 de la soupape A.

La soupape A comporte un chapeau 6 dont une région d'extrémité 7 est un cylindre fileté destiné à être vissé dans le logement taraudé 1 du bloc B. A proximité de son extrémité opposée 8, le chapeau porte un bouton de manoeuvre 9 monté mobile en rotation par rapport à lui et également en translation grâce à des surfaces de cames constituées par des rampes hélicoïdales réalisées en bout de l'extrémité 8 du chapeau pour coopérer avec des bossages prévus dans le bouton de manoeuvre 9. Dans sa zone reliant ses extrémités 7, 8, au-dessus de son extrémité filetée destinée à être vissée dans le logement taraudé 1, le chapeau 6 présente extérieurement un "six pans" 10 facilitant sa fixation d'une manière ferme sur le bloc B au moyen d'une clé. Ce chapeau 6 est creux sur toute sa longueur et la cavité traversante 11 ainsi formée débouche également à la périphérie du chapeau au-dessus du six pans par deux évents 12 diamétralement opposés.

La cavité traversante 11 présente, à proximité de l'extrémité du chapeau 6 destinée à être vissée dans le logement 1 du bloc, un lamage 13 de plus grand diamètre que le reste de la cavité 11 auquel il est relié par un épaulement formant butée 14. Ce lamage 13 sert de logement au pourtour d'une membrane 15 à déroulement dont la partie centrale, relativement épaisse, constitue le clapet 16 de la soupape, tandis que la zone reliant cette partie centrale au pourtour est adaptée à se dérouler lors du mouvement du clapet 16. Le pourtour de la membrane 15 est maintenu immobilisé contre la butée 14 par un anneau de maintien 17 logé également dans le lamage 13 dans lequel il est fixé par des moyens de clippage.

Le clapet 16 en une seule pièce avec la membrane 15, le chapeau 6 et le bouton de manoeuvre 9 sont assemblés par des moyens d'assemblage constitués par des organes comprenant une tige d'assemblage 18 traversant le clapet 16 et une cloison 19 en retrait à l'intérieur du bouton de manoeuvre 9 en passant par la totalité du chapeau 6 et des organes qu'il contient. La tige d'assemblage 18 est munie ici, à son extrémité traversant le clapet 16, d'une tête 20 légèrement en proéminence sous ce clapet, et en appui contre la face de ce dernier qui est opposée au bouton de manoeuvre 9. Les autres organes d'assemblage sont deux anneaux 21 à griffes, connus commercialement sous le nom d'"anneaux grifaxe", dont les griffes, dirigées vers le centre, s'agrippent contre le pourtour de la tige d'assemblage 18, ou similaires. L'un de ces anneaux 21, à proximité de l'extrémité de la tige 18 qui est opposée à la tête 20 de celle-ci, est en appui contre la face extérieure de la cloison 19 du bouton 9 de manière à empêcher la désolidarisation des composants de la soupape.

Le clapet 16 porte, contre sa face tournée vers l'intérieur de la cavité traversante 11, une coupelle 22 s'ouvrant en direction du bouton 9 ; le fond de cette coupelle 22, en appui contre le clapet 16, comporte, autour d'un trou central pour le passage de la tige 18, un lamage dans lequel est logé également un anneau 21 à griffes de telle sorte que le clapet 16 et le fond de la coupelle 22 soient immobilisés entre la tête 20 de la tige 18 et cet anneau 21. La coupelle 22 contient la partie inférieure d'un organe élastique de tarage de la soupape sous la forme d'un ressort hélicoïdal 23 (représenté schématiquement sur les figures) en appui à l'une de ses extrémités contre le fond de la coupelle et à l'extrémité opposée contre le fond 24 du chapeau 6 ; ce fond 24, qui est à proximité de l'extrémité du chapeau portant le bouton 6, est percé d'un trou central pour le passage de la tige 18. La compression du ressort 23 définit la pression de fonctionnement de la soupape. Il faut noter que le ressort 23 est, en toutes positions, partiellement visible de l'extérieur par les évents 12.

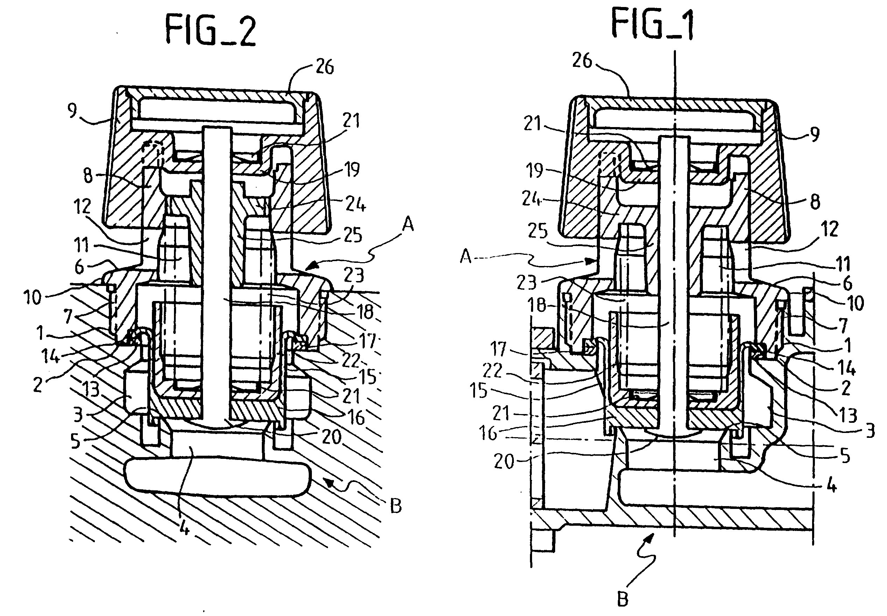

Sur la figure 1, le fond 24 du chapeau 6 est en une seule pièce avec la paroi latérale de celui-ci, et la soupape A est alors en version pré-tarée en usine.

Sur la figure 2, le chapeau 6 est représenté en deux pièces coaxiales dont la pièce centrale constitue le fond 24 ; ces deux pièces sont montées mobiles l'une par rapport à l'autre par le fait qu'elles sont solidarisées par un pas de vis, l'actionnement en rotation du fond 24 produisant simultanément son mouvement longitudinal et modifiant ainsi la compression du ressort de tarage 23 ; la soupape A de la figure 2 est donc tarable éventuellement après montage sur le bloc B, par rotation du fond 24 du chapeau 6, constituant un organe de tarage.

En dehors de la constitution du chapeau 6, la variante de la figure 2 est identique à la forme de réalisation de la figure 1, et c'est pourquoi les mêmes éléments sont référencés par les mêmes repères numériques, et il n'y a pas lieu de procéder à une nouvelle description la concernant spécialement.

On notera que de préférence le fond 24 comporte une douille de guidage 25 pour la tige d'assemblage 18 ; sur la figure 2, le fond 23 comporte, à l'opposé de la douille 25, une tête, pouvant être moletée, ou portant une empreinte pour un outil, facilitant son actionnement. La partie supérieure du boîtier 9 est obturée par un bouchon 26 de protection et d'inviolabilité servant également à l'identification de la soupape.

Le montage de la soupape, dans ces deux formes de réalisation, est très simple, tous ses composants s'empilant ou se montant dans le même sens, à savoir par le dessus. On a donc, ainsi empilés, la tige d'assemblage 18 munie de sa tête inférieure 20, l'anneau de maintien 17 du pourtour de la membrane 15, la membrane 15 avec son clapet 16 en une seule pièce, la coupelle 22 d'appui pour le ressort 23 de tarage, un anneau à griffes 21, le ressort 23 de tarage, le chapeau 6 auquel est fixé le pourtour de la membrane inséré entre la butée 14 et l'anneau de maintien 17, éventuellement la pièce de tarage 24, le bouton de manoeuvre 9, un autre anneau à griffes 21, et le bouchon 26 de protection, d'inviolabilité et d'identification.

Grâce à l'anneau de maintien 17 clippé dans le chapeau 6, la membrane est maintenue efficacement dans le chapeau et lors du montage de la soupape A sur le bloc B et plus précisément du vissage du chapeau 6 dans le logement 1, le vrillage de la membrane est évité et l'étanchéité est maintenue.

Lorsque la soupape est montée, le ressort 23 retient la membrane 15 plaquée sur son siège 5 tant que la pression de tarage n'est pas atteinte ; si la pression augmente encore, le ressort est comprimé, le fluide en excédent s'échappe, et lorsque la pression diminue, le ressort se détend jusqu'au moment où la membrane est à nouveau plaquée sur son siège. La modification du tarage est possible par l'actionnement de la pièce de tarage 24 ou par remplacement de la pièce chapeau 6.

En effet, on peut noter que cette soupape est de conception modulaire, c'est-à-dire qu'elle peut être constituée de composants divers de dimensions compatibles mais pouvant être de différentes matières ou susceptibles d'assurer des fonctions légèrement différentes ou supplémentaires selon l'appareil auquel la soupape doit être fixée. Par exemple, il est possible, grâce à la tête 20 de la tige d'assemblage 18, en légère proéminence sous le clapet, d'adjoindre un poussoir thermique monté sous le clapet et susceptible d'être mis en appui contre la tête 20 et de venir exercer une pression vers le haut contre cette tête, de telle sorte que la soupape puisse être constituée sous la forme d'une version pression-température.

Le clapet peut, comme cela est connu, être actionné manuellement en tournant le bouton de manoeuvre 9, grâce à la coopération des surfaces de cames du chapeau 6 et du bouton 9 (rampes hélicoïdales et bossages), ce qui permet des purges volontaires lorsque la pression n'atteint pas celle pour laquelle la soupape a été tarée ; la purge et la remise en fonctionnement normal de la soupape s'effectuent par des rotations de mêmes sens du bouton de manoeuvre 9 grâce à la conception discontinue des rampes et des bossages.

Dans une autre forme de réalisation avantageuse notamment par la réduction du nombre de pièces qu'elle permet, et ainsi par l'économie et la simplification de fabrication qu'elle apporte, les moyens d'assemblage du clapet 16, du chapeau 6 et du bouton de manoeuvre 9 ne sont pas constitués par une tige 18 munie d'une tête 20 en une seule pièce avec elle, en appui contre le clapet 16 et traversant outre le clapet, la coupelle 22, le chapeau 6 et le bouton de manoeuvre 9, et des anneaux à griffes, mais par le fait que la coupelle 22 comporte intérieurement et coaxialement une tige centrale 18 en une seule pièce avec elle et traversant d'un côté le clapet 16 et de l'autre le chapeau 6 et le bouton de manoeuvre 9, dont les extrémités sont agencées pour pouvoir maintenir en appui l'un contre l'autre le clapet, la coupelle, le chapeau et le bouton de manoeuvre. A cet effet, la partie de la tige qui traverse le clapet comporte un trou central dans lequel est logé le corps d'un rivet-clou dont la tête vient en appui contre le clapet comme cela était le cas de la tête 20 de la tige 18, tandis que la partie qui s'étend à l'opposé dans le bouton de manoeuvre comporte d'une part une fente diamétrale s'étendant longitudinalement et débouchant à l'extrémité libre de la tige pour conférer une bonne élasticité à la région de cette extrémité, et d'autre part, extérieurement, un renflement de clippage comportant un épaulement en appui contre le bouton de manoeuvre comme cela était le cas de l'anneau à griffes 21 supérieur, des formes de réalisation décrites précédemment.

Dans cette variante à clippage expansible, la tige d'assemblage n'est plus métallique, mais la coupelle 22 et la tige 18 sont fabriquées monobloc en matière synthétique, par exemple thermoplastique, par moulage par injection. En revanche, les autres pièces peuvent être identiques à celles des deux premières formes de réalisation.

## Revendications

1. Soupape à membrane destinée à être montée sur un bloc récepteur en vue de limiter la pression d'un fluide, du type comportant au moins un chapeau (6) dont une extrémité (7) est adaptée à être fixée sur le bloc (B) et portant à proximité de cette extrémité une membrane (15) souple en une seule pièce avec un clapet (16) destiné à coopérer avec un siège (5) réalisé dans le bloc, un bouton de manoeuvre (9) assemblé au chapeau dans la région de l'extrémité (8) de celui-ci qui est opposée à la membrane, des moyens (18, 21) d'assemblage du clapet (16), du chapeau (6) et du bouton de manoeuvre (9), et un organe élastique (23) de tarage, les moyens d'assemblage comportant une tige d'assemblage (18) traversant la soupape, du clapet (16) au bouton de manoeuvre (9) tous deux inclus, caractérisée en ce qu'elle comporte également un anneau de maintien (17) fixé dans le chapeau (6) et le pourtour de la membrane (15) est immobilisé entre une butée (14) formée dans le chapeau et cet anneau de maintien, et en ce que la tige d'assemblage (18) est munie, à son extrémité traversant le clapet (16), d'une tête (20) en appui sous ce clapet, contre la face de ce dernier qui est opposée au bouton de manoeuvre (9).

2. Soupape selon la revendication 1, caractérisée en ce que l'anneau de maintien (17) est clippé dans une extrémité du chapeau (6).

3. Soupape selon la revendication 1, caractérisée en ce qu'elle comporte un poussoir thermique monté sous le clapet (16) et en appui contre l'extrémité de la tige d'assemblage (18) qui traverse ce clapet.

4. Soupape selon la revendication 1, caractérisée en ce que le chapeau (6) comporte une cavité traversante (11) dans laquelle est logée une coupelle (22) contenant la partie inférieure de l'organe élastique (23) sous la forme d'un ressort hélicoïdal, et des évents (12) débouchant dans la cavité (11), par lesquels le ressort hélicoïdal est visible.

5. Soupape selon la revendication 1, caractérisée en ce que les moyens d'assemblage comportent la tige d'assemblage (18) et au moins un anneau (21) à griffes, dont les griffes, dirigées vers le centre, sont en appui contre la tige d'assemblage, ou similaire.

6. Soupape selon la revendication 1, caractérisée en ce que le chapeau est en une seule pièce et comporte un trou central pour le passage de la tige d'assemblage (18).

7. Soupape selon la revendication 1, caractérisée en ce que le chapeau (6) est en au moins deux pièces coaxiales dont l'une (24) est mobile à l'intérieur de l'autre et comporte un trou central pour le passage de la tige d'assemblage (18).

8. Soupape selon la revendication 1, caractérisée en ce qu'elle comporte, disposés empilés, la tige d'assemblage (18) munie de la tête inférieure (20), l'anneau de maintien (17) du pourtour de la membrane (15), le clapet (16) et la membrane (15) en une seule pièce, une coupelle d'appui (22) pour un ressort (23) de tarage, un anneau a griffes (21), le ressort de tarage (23), le chapeau (6) auquel est fixé le pourtour de la membrane (15) inséré entre une butée (14) formée dans le chapeau (6) et l'anneau de maintien (17), éventuellement une pièce de tarage (24), le bouton de manoeuvre (9), un autre anneau à griffes (21), et un bouchon de protection (26).

9. Soupape selon la revendication 1, caractérisée en ce qu'elle est constituée de composants modulaires.

10. Soupape selon la revendication 1, caractérisée en ce que les moyens d'assemblage comprennent une coupelle (22) et la tige d'assemblage (18), la coupelle (22) comportant intérieurement et coaxialement ladite tige en une seule pièce avec elle et une cavité contenant l'organe élastique sous la forme d'un ressort hélicoïdal et étant, à l'opposé de cette cavité, en appui contre le clapet, un rivet-clou logé dans une extrémité de la tige et comportant la tête (20) maintenant le clapet contre la coupelle, et, à l'extrémité opposée de la tige, une fente réalisée dans cette tige pour lui conférer une élasticité, et un renflement de clippage en appui contre le bouton de manoeuvre.

11. Soupape selon la revendication 10, caractérisée en ce que la tige traverse, d'un côté de la coupelle, le clapet, et de l'autre, le chapeau et le bouton de manoeuvre.

12. Soupape selon la revendication 10, caractérisée en ce que la pièce unique constituant la coupelle et la tige est en matière synthétique.

## Patentansprüche

1. Plattenventil für die Montage auf einem Aufnahmeblock zum Zweck der Begrenzung des Drucks einer Flüssigkeit, umfassend zumindest eine Abdeckhaube (6), deren eines Ende (7) so ausgelegt ist, daß es auf dem Block (B) befestigt werden kann, und die in der Nähe dieses Endes eine flexible Federplatte (15) aufweist, die aus einem Teil mit einer Klappe (16), gefertigt ist, die mit dem im Block eingelassenen Lager (5) kooperieren soll, einen Betätigungsknopf (9), der im Bereich des Endes (8) der Abdeckhaube montiert ist, das der Federplatte gegenüberliegt, Mittel (18, 21) zum Zusammenbauen der Klappe (16), der Abdeckhaube (6) und des Betätigungsknopfes (9) sowie ein elastisches Regulierungselement (23), wobei die Mittel zur Montage aus einer Montagestange (18) bestehen, die die Federplatte von der Klappe (16) bis zum Betätigungsknopf (9) jeweils inbegriffen quert, dadurch gekennzeichnet, daß es auch einen Haltering (17) umfaßt, der in der Abdeckhaube (6) befestigt ist, daß der Umfang der Federplatte (15) zwischen einem in der Abdeckhaube gebildeten Anschlag (14) und diesem Haltering festgehalten wird, und daß die Montagestange (18) an ihrem Ende, das die Klappe (16) durchstößt, einen Kopfteil (20) besitzt, der unter dieser Klappe gegen jene Seite von dieser drückt, die dem Betätigungsknopf (9) gegenüberliegt.

2. Ventil nach Anspruch 1, dadurch gekennzeichnet, daß der Haltering (17) in einem Ende der Abdeckhaube (6) eingeklemmt ist.

3. Ventil nach Anspruch 1, dadurch gekennzeichnet, daß es einen Thermodruckknopf aufweist, der unter der Klappe (16) eingebaut ist und gegen das Ende der Montagestange (18) drückt, die diese Klappe durchstößt.

4. Ventil nach Anspruch 1, dadurch gekennzeichnet, daß die Abdeckhaube (6) eine Quervertiefung (11), in der eine Schale (22) angeordnet ist, die den unteren Teil des elastischen Elements (23) in Form einer zylindrischen Schraubenfeder enthält, sowie Entlüftungslöcher (12), die in diese Vertiefung (11) münden und durch die die Schraubenfeder sichtbar wird, umfaßt.

5. Ventil nach Anspruch 1, dadurch gekennzeichnet, daß die Montagemittel die Montagestange (19) und zumindest einen Klauenring (21) umfassen, dessen mittig ausgerichtete Klauen gegen die Montagestange oder eine ähnliche Vorrichtung drücken.

6. Ventil nach Anspruch 1, dadurch gekennzeichnet, daß die Abdeckhaube (6) aus einem Teil besteht und mit einem mittig angebrachten Loch versehen ist, durch das die Montagestange (18) führt.

7. Ventil nach Anspruch 1, dadurch gekennzeichnet, daß die Abdeckhaube (6) aus zumindest zwei koaxialen Teilen besteht, von dem einer (24) beweglich in dem anderen gelagert ist und mit einer zentralen Bohrung für die Durchführung der Montagestange (18) versehen ist.

8. Ventil nach Anspruch 1, dadurch gekennzeichnet, daß es stapelförmig angeordnet folgendes umfaßt: die Montagestange (18) mit dem unteren Kopfteil (20), den Haltering (17) des Federplattenumfangs (15), die Klappe (16) und die Federplatte (15) aus einem Teil, eine Stützschale (22) für eine Regulierfeder (23), einen Klauenring (21), die Regulierfeder (23), die Abdeckhaube (6), mit der der Federplattenumfang (15) verbunden ist, der zwischen einem Anschlag (14) in der Abdeckhaube (6) und dem Haltering (17) sitzt, eventuell einen Regulierteil (24), den Betätigungsknopf (9), einen weiteren Klauenring (21) und einen Schutzstöpsel (26).

9. Ventil nach Anspruch 1, dadurch gekennzeichnet, daß es aus modularen Bestandteilen besteht.

10. Ventil nach Anspruch 1, dadurch gekennzeichnet, daß die Montagemittel folgendes umfassen: eine Schale (22) und die Montagestange (18), wobei die Schale (22) innen und koaxial, einen Teil mit ihr bildend, die genannten Stange aufnimmt, eine Vertiefung, die das elastische Element in Form einer Schraubenfeder enthält, die gegenüber von dieser Vertiefung gegen die Klappe drückt, einen Nietnagel, der in einem Ende der Stange untergebracht ist und den Kopf (20) umfaßt, der die Klappe gegen die Schale drückt, sowie am gegenüberliegenden Ende der Stange einen Schlitz, der in dieser Stange gebildet ist, um ihr größere Elastizität zu verleihen, und einen Einklemmwulst, der gegen den Betätigungsknopf drückt.

11. Ventil nach Anspruch 10, dadurch gekennzeichnet, daß die Stange auf einer Seite der Schale die Klappe und auf der anderen die Abdeckhaube und den Betätigungsknopf durchstößt.

12. Ventil nach Anspruch 10, dadurch gekennzeichnet, daß der einzelne Teil, der die Schale und die Stange bildet, aus Kunststoff gefertigt ist.

## Claims

1. Diaphragm valve which is designed to be fitted on a receiver block, in order to limit the pressure of a fluid, of the type which comprises at least one cap (6), one end (7) of which is suitable for being secured to the block (B), and supports in the vicinity of this end a flexible diaphragm (15), which is integral with a shutter (16) designed to co-operate with a seat (5) provided in the block, a control button (9) which is connected to the cap in the area of the end (8) of the latter which is opposite the diaphragm, means (18, 21) for assembling the shutter (16), the cap (6) and the control button (9), and a resilient calibration unit (23), the assembly means comprising an assembly rod (18) which passes through the valve, from the shutter (16) to the control button (9), both inclusive, characterised in that it also comprises a support ring (17) which is secured in the cap (6), and the periphery of the diaphragm (15) is immobilised between a stop (14) formed in the cap and this support ring, and in that the assembly rod (18) is provided, at its end which passes through the shutter (16), with a head (20) which is supported beneath this shutter, against the surface of the latter which is opposite the control button (9).

2. Valve according to claim 1, characterised in that the support ring (17) is clipped into one end of the cap (6).

3. Valve according to claim 1, characterised in that it comprises a thermal thruster which is fitted beneath the shutter (16), and is supported against the end of the assembly rod (18) which passes through this shutter.

4. Valve according to claim 1, characterised in that the cap (6) comprises a through-cavity (11), in which there is accommodated a dish (22), which contains the lower part of the resilient unit (23) which is in the form of a helical spring, and vents (12) which open into the cavity (11), through which the helical spring can be seen.

5. Valve according to claim 1, characterised in that the assembly means comprise the assembly rod (18), and at least one ring (21) with claws, the claws of which, which face the centre, are supported against the assembly rod or the like.

6. Valve according to claim 1, characterised in that the cap (6) is in a single piece, and contains a central hole for passage of the assembly rod (18).

7. Valve according to claim 1, characterised in that the cap (6) is in at least two coaxial pieces, one (24) of which is displaceable inside the other, and comprises a central hole for passage of the assembly rod (18).

8. Valve according to claim 1, characterised in that it comprises, disposed stacked, the assembly rod (18) which is provided with the lower head (20), the ring (17) to support the periphery of the diaphragm (15), the shutter (16) and the diaphragm (15) which are integral, a support dish (22) for a calibration spring (23), a ring (21) with claws, the calibration spring (23), the cap (6) to which there is secured the periphery of the diaphragm (15), which periphery is inserted between a stop (14) formed in the cap (6) and the support ring (17), optionally a calibration piece (24), the control button (9), another ring (21) with claws, and a protective stopper (26).

9. Valve according to claim 1, characterised in that it consists of modular components.

10. Valve according to claim 1, characterised in that the assembly means comprise a dish (22) and the assembly rod (18), the dish (22) containing the said rod integrally and coaxially in its interior, and a cavity which contains the resilient unit, which is in the form of a helical spring, and which opposite this cavity is supported against the shutter, a rivet / stud which is accommodated in one end of the rod and comprises the head (20) which maintains the shutter against the dish, and, at the opposite end of the rod, a slot which is provided in this rod in order to provide it with resilience, and a clipping projection which is supported against the control button.

11. Valve according to claim 10, characterised in that on one side of the dish, the rod passes through the shutter, and on the other side it passes through the cap and the control button.

12. Valve according to claim 10, characterised in that the single piece which constitutes the dish and the rod is made of synthetic material.
